Europäisches Patentamt

European Patent Office

Office européen des brevets

(19)

(11) Publication number: **0 104 744**
A2

# (12) EUROPEAN PATENT APPLICATION

(21) Application number: **83304761.6**

(51) Int. Cl.³: **H 02 M 7/155**

(22) Date of filing: **17.08.83**

(30) Priority: **02.09.82 US 414409**

(43) Date of publication of application:
**04.04.84 Bulletin 84/14**

(84) Designated Contracting States:
**CH DE FR GB IT LI SE**

(71) Applicant: **MINNESOTA MINING AND
MANUFACTURING COMPANY
3M Center, P.O. Box 33427
St. Paul, MN 55133(US)**

(72) Inventor: **Morgan, James B. c/o Minnesota Mining and
Manufacturing Company 2501 Hudson Road
St. Paul Minnesota 55133(US)**

(72) Inventor: **Sheffield, William F. c/o Minnesota Mining and
Manufacturing Company 2501 Hudson Road
St. Paul Minnesota 55133(US)**

(72) Inventor: **Chiswell, Earl c/o Minnesota Mining and
Manufacturing Company 2501 Hudson Road
St. Paul Minnesota 55133(US)**

(74) Representative: **Baillie, Iain Cameron et al,
c/o Ladas & Parry Isartorplatz 5
D-8000 München 2(DE)**

(54) **Regulation circuit.**

(57) A regulation circuit providing timing gate signals to the
power section (10) of a power supply providing close
regulation over a wide range of temperatures and with
various A.C. line voltages used throughout the world. A
gated semiconductor device (16) is utilized to provide gate
signals to the power section for control of the power section
output. The regulation circuit includes a soft start circuit
portion (18), the initiation and resetting of which is under the
control of a delay "on" relay (24). An optical feedback circuit
(22), which includes a preheat circuit portion, is used for
improvement of the regulation.

EP 0 104 744 A2

./...

Croydon Printing Company Ltd.

FIG.1

## Description
## Regulation Circuit

### Technical Field

The invention presented herein relates to power supply regulation and, more particularly, to a regulation circuit operable over a wide temperature range and with the various A.C. line voltages encountered throughout the world for providing timing gate signals to a power section of a power supply with protection provided for a connected load following a momentary power interruption and upon the initial application of power.

There is need, particularly in the case of portable equipment, for a regulated direct current power supply circuit of minimal weight which can provide regulation within plus or minus three percent of a desired level of 82 volts when energized from alternating voltage sources of 90 to 250 volts at 50 or 60 Hertz and at ambient circuit temperatures varying from about -18°C to 66°C. In the case of portable equipment in which a direct current power supply is used to energize an incandescent lamp, such as for a portable overhead projector, additional operating features for the direct current power supply are desired, such as protection of the lamp against failure due to momentary line voltage dropout and the supply of current to the lamp due to line voltage spikes produced when the circuitry is turned on.

### Background Art

Known regulation circuits, while providing a solution to the weight problem by the elimination of a supply transformer, fail to economically provide the desired degree of regulation and protection indicated above. Protection against failure due to momentary line voltage dropout when provided are overly complicated and the use of a large number of semiconductor devices in a controller in an effort to meet the voltage range specification make the solution with respect to temperature range more difficult to attain. United States Patent 4,224,563 discloses a regulation circuit for providing timing gate signals to a power section of a power supply to provide regulation that is plus or minus 10 percent across a lamp with an input line voltage ranging in frequency between 50 and 60 Hertz and ranging in amplitude between 90 and 240 volts rms. This circuit is overly complicated and employs a large number of semiconductor devices.

While optical feedback arrangements have been employed in regulation circuits to improve performance, such arrangements can cause an excessive momentary rise or overshoot in the load current when the circuitry is initially energized causing a lamp, when used as a load, to operate momentarily at a higher level than desired. This excessive rise in the load current can result in premature failure of a lamp.

United States Patent 4,227,119 discloses an optical feedback arrangement wherein light from the lamp, which is the load for the circuit, is directed to a feedback light receiving element to complete the feedback loop. The overshoot problem mentioned is solved in the arrangement disclosed in the patent by the use of another lamp which is illuminated prior to the supply of energy to the load lamp and is positioned so its light output is also directed to the feedback light receiving element. Such an arrangement is complicated and places restrictions on the placement of the two lamps.

## Disclosure of Invention

A regulation circuit embodying the invention presented herein provides timing gate signals to a power section adapted for energization from an A.C. source such that a D.C. output can be obtained that is within plus or minus three percent of a desired level of 82 volts over an A.C. input range of 90 to 250 volts at 50 or 60 Hertz and at temperatures varying from about -18°C to 66°C. Such a regulation circuit includes a gated semiconductor device operatively connected for supplying timing gate signals to the power section of the power supply. The conduction of the gated semiconductor device is determined by the voltage difference between a first and second terminal. A voltage control circuit portion is provided for the gated semiconductor device which is adapted for energization from a full-wave rectifier energized by the A.C. source for the power section. The voltage control circuit portion includes a first circuit portion connected to the first of said terminals of said gated semiconductor device for supplying a first control voltage thereto, and a second circuit portion connected to the second of said terminals of said gated semiconductor device for supplying a second control voltage thereto. The gated semiconductor device conducts when the second control voltage exceeds the first control voltage by a predetermined amount. A feedback circuit portion is operatively connected to the D.C. output of the power section and to the first circuit portion to change the first control voltage in relation to the level of the D.C. output of the power section. The feedback circuit portion includes a light source connected for energization by the D.C. output of the power section and a light-sensitive resistive element that is connected to the first circuit portion. The light-sensitive resistive element receives light only from the light source of the feedback circuit portion. The feedback circuit portion improves the voltage regulation with compensation improved at low temperatures.

One aspect of the feedback circuit portion is the use of a preheat circuit portion which provides current to the light source of the feedback circuit portion before there is a D.C. output from the power section. The current provided by the preheat circuit portion decreases as D.C. output is provided from the power section. This preheat circuit portion solves the overshoot problem that is presented when the light source in the feedback circuit portion is not provided with a preheat current.

Another aspect of the invention relates to the provision of a capacitor in the second circuit portion of the voltage control circuit portion with another capacitor operatively connected to the second circuit portion of the voltage control circuit portion to provide a soft start function with a discharge circuit portion provided for the capacitors which includes a delay "on" relay that is operatively connected in series with the voltage control circuit portion. The relay includes a contact that is operatively connected to discharge the soft start capacitor and the capacitor of the second circuit portion of the voltage control circuit when said relay is not energized and allow such capacitors to be charged when said relay is energized so as to operate the contact to the open position. Energization of the relay to cause operation of the contact is delayed for a time following energization of the voltage control circuit portion allowing the first circuit portion to begin operation for supplying the first control voltage before the second circuit portion begins operation for supplying the second control voltage. The use of the delay "on" relay serves to eliminate momentary premature operation of the gated semiconductor device which sometimes occurs when the power switch for the circuitry is turned on and is distracting when the D.C. output from the power section is used to energize a lamp.

A further aspect of the invention is the use of a resistor that varies with temperature which is connected in the second circuit portion of the voltage control circuit portion. Such a resistor serves to provide high temperature compensation without adversely affecting low temperature performance of the regulation circuit.

## Brief Description of the Drawings

A better understanding of this invention, including its novel features and advantages, will be obtained upon consideration of the following detailed description and the accompanying drawings wherein

Figure 1 is a circuit in block diagram form embodying the invention; and

Figure 2 is a schematic circuit of the circuit of Figure 1 showing further details.

## Detailed Description

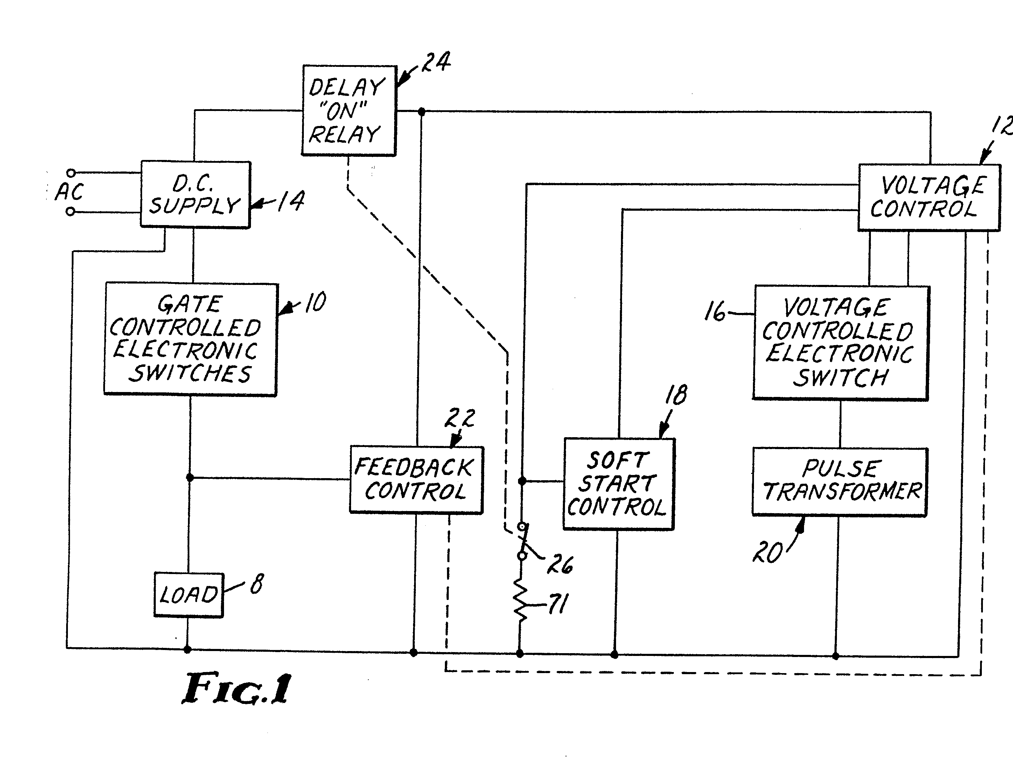

Referring to Figure 1 of the drawings, a regulated direct current supply circuit is shown in block diagram form connected to a load 8. The circuit includes a power section represented by the D.C. supply 14 that is energized from an A.C. supply plus the gate controlled electronic switches 10. The remainder of the circuit is a regulation circuit which serves to provide timing gate signals to the gate controlled electronic switches 10 of the power section to control the time that a D.C. output is supplied to the load 8. The regulation circuit portion includes a voltage controlled electronic switch 16, the operation of which is controlled by two control voltages supplied to it from a voltage control 12. The switch 16 is operatively connected to the gate controlled electronic switches 10 via a pulse transformer 20. A gate signal is provided to the switches 10 each time the electronic switch 16 conducts. The regulation circuit portion also includes a soft start control 18 which is connected to the voltage control 12. The soft start control 18 serves to modify operation of the voltage control 12 so that control of the conduction of switch 16 is such that the power output from the power section increases to a desired level at a safe rate. This is particularly important when the load 8 is an incandescent lamp, since the cold resistance of an incandescent lamp is relatively low resulting in premature lamp failure when the lamp is subjected to a high initial current level.  A reset means is provided for resetting the soft start control 18 and includes a delay "on" relay 24 having a contact 26 that is in the closed position when the winding of the relay is not conducting at a level sufficient to open the contact.  Resetting of the soft start control 18 assures a soft start for the load 8 when there is a line voltage dropout.  The use of a delay "on" relay 24 also serves to allow one of the control voltages provided by the voltage control 12 to be established before the voltage control 12 is effective to establish the other control voltage.  This arrangement is effective to eliminate momentary premature energization of the load that sometimes occurs when the power switch for the circuitry is turned on.  Such momentary energization of the load 8 is objectionable when the load 8 is an incandescent lamp.  While the voltage control 12 is arranged to provide good regulation, a feedback control 22 is used as a part of the regulation circuit and serves to improve the regulation at lower temperatures.  The feedback control is responsive to the D.C. output from the power section and is connected to modify one of the two control voltages provided by the voltage control 12 so that such control voltage varies directly with the level of the D.C. output.

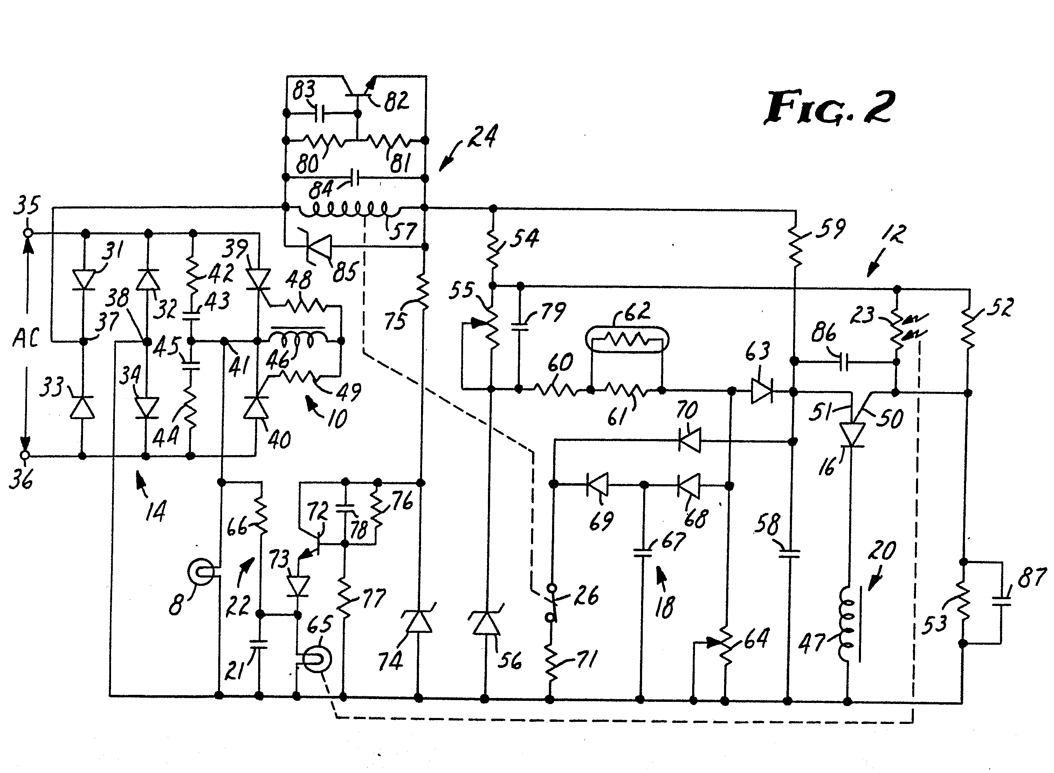

Figure 1 and the foregoing description provide only a general showing and description of the regulation circuit embodying the invention presented herein, so a more detailed showing and description is required for a full disclosure of the invention.  This is provided by the schematic circuit diagram that is set forth in Figure 2 of the drawings when considered with the further description that is to follow.

Referring to Figure 2 of the drawings, the D.C. supply includes four diodes 31-34 connected to form a conventional full-wave rectifier.  The anode of the diode 31 and the cathode of diode 32 connect with one input terminal 35 for the circuit while the anode of diode 33 and the cathode of diode 34 connected with the other input erminal 36 of the circuit. One output terminal 37 of the full-wave rectifier is provided at the connection common to diodes 31 and 33 with the other output terminal 38 being provided by the connection common to diodes 32 and 34. The back-to-back connected diodes 32 and 34 connect with the gate controlled electronic switches 10 provided by two front-to-front connected silcon controlled rectifiers (SCR) 39 and 40 to provide a rectifying bridge circuit. The anode of SCR 39 is connected to the cathode of diode 32 while the anode of SCR 40 is connected to the cathode of diode 34 so the input terminals for the diode-SCR bridge circuit correspond to the input terminals 35 and 36 for the full-wave rectifier circuit that has been described. The output terminals for the diode-SCR bridge circuit are provided by the output terminal 38 and the connection 41 common to the cathodes of SCR 39 and 40. The load 8, shown as an incandescent lamp, is connected between the terminals 38 and 41. In order to limit the rate of voltage change across SCR 39, a series combination of a resistor 42 and capacitor 43 is connected across the SCR. A similar series combination of a resistor 44 and capacitor 45 is connected across the SCR 40. Timing gate signals are applied to the SCR 39 and 40 via the secondary winding 46 of the pulse transformer 20 which has its primary winding 47 connected to the output of the voltage controlled electronic switch 16. With this arrangement, a pulse is produced at the secondary winding 46 each time the electronic switch 16 conducts. The secondary winding 46 has one end connected to the connection common to the cathodes of SCR 39 and 40 and has its other end connected to the gate electrode of SCR 39 via a gate current limiting resistor 48 and to the gate electrode of SCR 40 via a gate current limiting resistor 49. The D.C. output that is presented to the load 8 connected to the output terminals 38 and 41 is determined by the point in each cycle of the A.C. power presented to the anode of SCR 39 and SCR 40 at which timing gate signals are provided to the gate electrode of SCR 39 and 40 cause the SCR's to conduct. Regulation of the timing gate signals for SCR 39 and 40 is provided by the remainder of the circuitry of Figure 2.

The regulation portion of the circuitry has been indicated as including a voltage control 12 which serves to provide two control voltages for a voltage controlled electronic switch 16 which, as shown in Figure 2, can be a programmable unijunction transistor (PUT). The PUT 16 has a gate electrode 50 and an anode electrode 51. The voltage presented at the gate electrode 50 determines the voltage needed at the anode electrode 51 to cause the PUT 16 to conduct. It is necessary that the voltage applied to the anode electrode 51 exceed the sum of the gate electrode 50 voltage plus the voltage drop presented between the gate and anode electrodes 50 and 51.

The voltage control 12 will be considered with respect to that portion which provides the voltage for anode electrode 51 and the portion that provides the voltage to gate electrode 50. The portion of voltage control 12 which determines the voltage for gate electrode 50 includes a resistor 52 connected in series with a resistor 53. The connection common to resistors 52 and 53 is connected to the gate electrode 50. The other end of resistor 53 connects with the output terminal 38 of the power section 14. The other end of resistor 52 connects with a voltage divider arrangement. More specifically, it connects with the connection that is common to a resistor 54 and series connected potentiometer resistor 55. Resistors 54 and 55 with a Zener diode 56, which has its anode connected to the other end of resistor 55 and its cathode to the output terminal 38, provide a voltage divider arrangement. The other end of resistor 54 is connected to voltage control 12 end of the winding 57 of a delay "on" relay 24. A filter capacitor 79 is connected across the potentiometer resistor 55. The portion of the voltage control 12 that determines the voltage for anode electrode 51 of PUT 16 includes a capacitor 58 which is connected between the anode electrode 51 and the output terminal 38 of the power section 14. The capacitor 58 is charged via two different charging paths. One path is provided by a resistor 59 connected between the voltage control 12 end of relay winding 57 and the anode electrode 51 side of capacitor 58. The other charging path is provided by a resistor 60 connected in series with parallel connected resistors 61 and 62. This series-parallel combination of resistors is connected at one end to the connection common to Zener diode 56 and resistor 55 and at the other end to the anode electrode 51 via a diode 63. Diode 63 is poled to allow current to flow to charge the capacitor 58. The resistor 62 has a positive temperature coefficient such that temperature compensation is provided at the high end of a circuit operating temperature range that extends from -18°C to 66°C. In addition to providing a charging path for capacitor 58, the resistors 60-62 are connected in series with a potentiometer resistor 64 to provide a voltage divider with respect to the voltage presented across the Zener diode 56. One end of the potentiometer resistor 64 is connected to the connection common to resistors 61, 62 and the anode of diode 63 with the other end of resistor 64 connected to the output terminal 38 of the power section 14. The series combination of resistors 60-62 and capacitor 58 is much smaller than the time constant established by resistor 59 and capacitor 58 so the combined charging paths for capacitor 58 cause the voltage of capacitor 58 to quickly reach the voltage as determined by a voltage divider made up of resistors 60-62 and the potentiometer resistor 64. The charge path provided via resistor 59, which connects to a higher voltage level causes the capacitor 58 to charge to a higher voltage at a slower rate. The point in each half cycle of the A.C. voltage at which the voltage at capacitor 58 exceeds the sum of the voltage provided to the gate electrode 50 plus the voltage drop between electrodes 50 and 51 determines when the PUT 16 conducts. Conduction of PUT 16 discharges the capacitor 58 rapidly via the primary winding 47 of the pulse transformer 47. Current flow is induced in the secondary winding 46 of the pulse transformer to cause one of the SCR 39 or 40 to conduct. The SCR to which a positive voltage is present at its anode relative to its cathode is the one which conducts and will continue to conduct for the remainder of the half cycle of A.C. voltage that is presented to it. The PUT 16 will conduct at a like point in the next half cycle of the A.C. voltage causing the gating signal induced in the secondary winding 46 of the pulse transformer to fire the other SCR and cause it to conduct for the remainder of such half cycle of the A.C. voltage.

Disregarding the operation of the delay "on" relay winding 57 that has been mentioned, the arrangement that has been described allows the potentiometer resistors 55 and 64 to be adjusted to establish the firing time or firing angle of the PUT 16 and, in turn, the firing of the SCR 39 and 40 for a given A.C. input voltage to establish a desired rms voltage at the load 8. It can be seen that a change in the A.C. input voltage to the circuit will alter the point at which the PUT 16 fires since an increase in the A.C. input, for example, causes the voltage at the gate electrode 50 to be increased and also reduces the time that capacitor 58 reaches a given voltage level via the charge path via resistor 59. Due to the voltage regulation function provided by a Zener diode, a change in A.C. input voltage does not alter the voltage available across the Zener diode 56 for charging capacitor 58. The setting of potentiometer resistor 64 determines the voltage available for charging capacitor 58 via the charge path provided by resistors 60-62, which will have a bearing on the firing point for the PUT 16. Similarly, the setting of potentiometer resistor 55 determines the voltage at gate electrode 50 and, therefore, the firing point for the PUT 16. The potentiometer resistors 55 and 64 can be adjusted so that a desired rms voltage will be obtained with essentially little variation over the range of A.C. input voltages one may encounter throughout the world. Such a range extends from 90 volts to 250 volts A.C. The adjustment of potentiometer resistors 55 and 64 to obtain these regulation results is a one-time factory adjustment for each circuit that is assembled. After an initial adjustment is made of the potentiometer resistors 55 and 64 to obtain a desired rms voltage at the load 8, the applied A.C. input voltage is increased. If the rms voltage at the load 8 increases, the setting for potentiometer resistor 64 is changed to increase the resistance presented to the circuit and visa versa. The potentiometer resistor 55 is then adjusted to provide the desired rms voltage at the load 8. This process is repeated until changes made in the A.C. input voltage have a minimal effect on the rms voltage at load 8.

While the arrangement described to this point will provide good regulation, the regulation is improved by a feedback circuit 22, particularly with respect to regulation at the lower temperature end of the desired -18°C to 66°C range. The feedback circuit 22 is effective to monitor the voltage output provided to the load 8 and change the voltage at the gate electrode 50 of PUT 16 so that an increase in the voltage output to the load 8 causes an increase in the voltage at gate electrode 50 to delay the firing of the PUT 16 and visa versa. The feedback circuit 22 includes an incandescent lamp 65 connected in series with a current limiting resistor 66 with such series combination connected in parallel with the load 8, i.e., connected between the output terminals 38 and 41. The feedback circuit also includes a photoresistor 23 positioned to respond to the light from lamp 65. The photoresistor 23 is connected in parallel with resistor 52 to modify the voltage presented to gate electrode 50 of PUT 16. Even with the feedback circuit 22 there is a tendency for the voltage at the load 8 to increase slightly as the ambient temperature of the circuit goes above about 40°C, but this is compensated by the resistor 62 mentioned earlier which has a positive temperature coefficient. A capacitor 21 is also included in the feedback circuit 22 and is connected in parallel with the lamp 65. It is desired that the regulation circuitry be usable at 50 Hertz and 60 Hertz. The capacitor 21 serves to reduce the frequency sensitivity of the feedback circuit portion.

The feedback circuit portion 22 also includes some additional circuitry which will be discussed only after that portion of the regulation circuitry that provides a soft start function has been discussed. The term "soft start" is used to refer to functioning of the regulation circuitry wherein provision is made to allow the output voltage to the load 8 to build up over a period of time to the desired output voltage level in order to protect the load 8, particularly when the load 8 is an incandescent lamp. Circuitry used to provide this function is referred to as soft start circuitry. Referring to Figure 1, the soft start control was indicated by the block 18. Referring to Figure 2, the soft start control 18 is provided by a capacitor 67 and a series connected blocking diode 68 wherein such series combination is connected across the potentiometer resistor 64. The diode 68 is poled so the capacitor 67 cannot discharge via the potentiometer resistor 64 or the PUT 16. As can be seen in Figure 2, the soft start capacitor 67 is in parallel with capacitor 58 with respect to the charging path provided via resistors 60-62. The time constant for the charging path involving capacitor 67 is much longer than for that involving capacitor 58 so capacitor 58 will only charge to a level corresponding to that for capacitor 67 following energization of the circuitry. The voltage provided for the anode electrode 51 of PUT 16 will rise slowly so an initial firing of the PUT will occur near the end of a half cycle of the rectified A.C. with the firing of the PUT 16 occurring a little sooner with each half cycle pulse until the point is reached where the capacitor 67 is fully charged to establish a steady state condition. As indicated earlier, the blocking diode 68 prevents capacitor 67 from being discharged via the PUT 16.

Since a time will occur when power is removed from the circuitry, resetting of soft start circuitry is required. While this could be accomplished via a bleeder resistor, a problem would be presented in the case of a momentary voltage dropout. In the case of a momentary voltage dropout, capacitor 67 would not be discharged when the voltage is restored so a soft start would not be provided leading to possible premature failure of a lamp when used for the load 8. Provision is made in the circuitry by the use of a relay 24 which has a normally closed contact 26 which is closed when the relay 24 is not energized as is the case for a voltage dropout. The contact 26 is connected in series with resistor 71 with such series combination connected across capacitor 67 via a blocking diode 69 and across capacitor 58 via a blocking diode 70. When relay 24 is not energized, contact 26 is closed causing capacitors 58 and 67 to be discharged rapidly. When the relay contact 26 is opened again, capacitors 58 and 67 can then charge in the manner described earlier wherein a soft start is provided.

The use of a soft start control causes the feedback circuit 22 that has been described to present an overshoot problem. The overshoot problem is due to the slow response time of the feedback circuit. Since the feedback circuit responds to the low soft start output voltage to lower the voltage at the gate electrode 50 and thereby correct the low voltage output that is present to the load 8 during the soft start, the slow response time causes the correction to provide an output voltage to overshoot the desired regulated level. The overshoot is objectionable where a lamp 8 is used as a load since the lamp 8 will reach a brighter level that is desired and then settle down to the desired steady state condition. The overshoot experienced is avoided by the additional circuitry provided in the feedback circuitry 22 which provides for current flow to the feedback lamp 65 prior to firing of the PUT 16 with such current flow reduced as the PUT 16 begins operation.  The additional circuitry will for convenience be referred to as a preheat circuit.  The preheat circuit portion of the feedback circuit 22 includes an NPN type transistor 72 which has its emitter connected via a blocking diode 73 to feedback lamp 65 at the connection common to lamp 65 and resistor 66.  The voltage provided to the collector of the transistor is obtained from a Zener diode 74 which has its anode connected to the voltage output terminal 38 and its cathode connected via a resistor 75 to voltage control 12 side of relay winding 57. The current provided to the base of transistor 72 is determined by two resistors 76 and 77 connected in series across the Zener diode 74 with a capacitor 78 connected in parallel with resistor 76.  Resistor 76 has one end connected to the collector and its other end, which connects with resistor 77, connected to the base of the transistor.  When the circuitry is energized, transistor 72 conducts to provide current to the feedback lamp 65 with such current flow diminishing to a very low level as capacitor 78 becomes charged to essentially turn the transistor 72 off.

The current through the lamp 65 can be considered in three phases.  The first phase is when transistor 72 comes on immediately and the only current through the lamp 65 is from transistor 72.  This phase brings the value of resistor 23 down to the point which will ensure that the voltage to lamp 8 will not exceed the desired regulation voltage.  The second phase is where transistor 72 goes from the on to the off condition due to charging of capacitor and PUT 16 is starting to fire.  The current through the lamp 65 consists of a decreasing component from transistor 72 and an increasing component due to the firing of the SCR 39 and 40 by PUT 16.  The third phase is where transistor 72 is off and the current through the lamp 65 comes almost totally from SCR 39 and 40. It reaches its steady state controlling condition as the soft start capacitor 67 reaches its final charge. There is some interaction and overlap in the two time constants associated with transistor 72 turn off and the soft start turn on of PUT 16. These can be adjusted experimentally to give the desired overall soft start characteristic.

The relay 24 is a delay "on" relay which means a slight delay is provided between application of power to the circuit and the operation of the relay contact 26 to move it to the open position. A delay "on" relay is used since it keeps the anode electrode of PUT 16 essentially at ground potential permitting a voltage to be presented at gate electrode 50 before the voltage at the anode electrode 51 can rise to turn on the PUT 16. Capacitor 79 will be charged following application of power to the circuitry so time is needed for the gate electrode 50 to be provided with a voltage. This arrangement prevents the PUT 16 from firing prematurely which sometimes occurs when the power switch (not shown) for the circuitry is turned on. The delay provided by the delay "on" relay 24 also allows the feedback circuit 22 to be effective to increase the voltage at the gate electrode 50 before a voltage at the anode electrode 51 reaches the level needed to turn on the PUT 16.

A standard relay is modified by the transistor circuit shown in Figure 2 to provide a delay "on" relay. Such circuitry includes resistors 80 and 81 connected in series with such combination connected across the relay winding 57 plus an NPN transistor 82. The base of the transistor 82 is connected to the connection common to resistors 80 and 81 while its collector connects with the output terminal 37 end of winding 57 which is also connected to resistor 80. The circuit also includes a capacitor 83 which is connected across the resistor 80. With this arrangement, the transistor 82 conducts to provide a current by-pass around the relay winding 57 until the capacitor 83 is charged to essentially turn the transistor off thus delaying the time until the winding 57 conducts sufficiently to cause operation of the relay contact 26. The relay winding 57 is also shown with a capacitor 84 connected across it. The capacitor 84 is a hold-in capacitor. A Zener diode 85 is also shown connected in parallel with the relay winding 57 which serves to protect the winding 57 since the circuitry is to be operated with A.C. inputs varying from 90 volts A.C. to 250 volts A.C.

No mention has been made to this point of capacitor 86 connected between the electrodes 50 and 51 of the PUT 16 and capacitor 87 connected across the resistor 53. Without capacitors 86 and 87 in the circuitry, other electrical equipment connected to the power line and placed in operation when the circuitry is operating may sometimes cause a momentary increase in the current through the load 8. In the case of a lamp for load 8, this can be noticeable in some applications and be objectionable. Capacitors 86 and 87 eliminate this problem.

The particulars of the foregoing description are provided merely for purposes of illustration and are subject to a considerable latitude of modification without departing from the novel teachings disclosed therein. For example, while the regulation circuitry has been described using a pulse transformer 20 to operatively connect the PUT 16 to supply timing gate signals to SCR 39 and 40, it is obvious to those skilled in the art that the pulse transformer 20 could be eliminated with the cathode of PUT 16 then connected directly or via a diac to the connection common to resistors 48 and 49. Similarly, the SCR 39 and 40 can be replaced with a triac device. Accordingly, the scope of this invention is intended to be limited only as defined in the appended claims, which should be accorded a breadth of interpretation consistent with this specification.

0104744

-1-

Claims

1. A power supply regulation circuit (12, 16, 18, 20, 22) for providing timing gate signals to a power section (10) of a power supply (14) having a full-wave rectifier and adapted for energization from an A.C. source, the occurrence times of the power section gate signals determining the level of the D.C. output of the power section, the regulation circuit having a gated semiconductor device (16), the conduction of which is determined by the voltage difference between a first and second terminal thereof, the gated semiconductor device having an output terminal operatively connected for supplying gate signals to the power section at the time said gated semiconductor device is conductive; a voltage control circuit portion (12) adapted for energization from the full-wave rectifier for the power section, the voltage control circuit portion including

(a)  a first circuit portion (23, 52, 53) connected to the first (50) of said terminals of the gated semiconductor device (16) for supplying a first control voltage thereto,

(b)  a second circuit portion (58, 60-63) connected to the second (51) of said terminals of the gated semiconductor device for supplying a second control voltage thereto, the gated semiconductor device (16) conducting when the second control voltage exceeds the first control voltage by a predetermined amount, the regulation circuit characterized by:

a feedback circuit (22) operatively connected to the D.C. output of the power section and to the first circuit portion (23, 52, 53) for causing the first control voltage provided by said first circuit portion to vary directly with the level of the D.C. output of the power section, said feedback circuit including

(a) a light source (65) connected for energization by the D.C. output of the power section,

(b) a light-sensitive resistive element (23) connected to said first circuit portion receiving light only from said light source, and

(c) a preheat circuit (72, 73, 76, 77, 78) operatively connected to said light source (65) and adapted for energization from a full-wave rectifier energized by the A.C. source for the power section, said preheat circuit providing current flow through said light source for a limited period of time including the time before any output is present at the D.C. output of the power section.

2. A power supply regulation circuit according to claim 1 characterized in that:

the second circuit portion includes a resistor (62) which varies with temperature to provide temperature compensation for the power supply regulation circuit.

3. A power supply regulation circuit according to claim 1 or 2 characterized in that:

said preheat circuit (72, 73, 76, 77, 78) includes a transistor (72) and a capacitor (78), said capacitor connected to said transistor for controlling the conduction of said transistor in accordance with the degree to which said capacitor is charged.

4. A power supply regulation circuit according to claim 1 characterized in that:

the second circuit portion includes a first capacitor (58) connected to the second of said terminals;

the regulation circuit further including:

a second capacitor (67) connected in parallel with said first capacitor;

a discharge circuit portion (24, 69, 70, 71) for said first and second capacitors including a delay "on" relay (57) operatively connected in series with said voltage control circuit portion (12), said relay (57) having a contact (26) operatively connected for discharging said first (58) and second (67) capacitors when said relay is not energized and for allowing said first and second capacitors to be charged when said relay is energized.

5. A power supply regulation circuit according to claim 4 characterized in that:

said delay "on" relay (57) includes a winding (57) and a by-pass circuit (80-84) connected to said winding for delaying energization of said relay for a time following energization of said voltage control circuit portion (12) allowing said first circuit portion to begin operation for supplying said first control voltage before said second circuit portion begins operation for supplying said second control voltage.

6. A power supply regulation circuit according to claim 5 characterized in that:

said by-pass circuit includes a transistor (82) and a capacitor (83) connected to said transistor, said transistor operatively connected to said winding (57) for providing current path around said winding when said transistor conducts, said capacitor (83) connected to said transistor (82) for controlling the conduction of said transistor in accordance with the degree to which said capacitor connected to said transistor is charged.

FIG.1

FIG. 2

2/2

0104744